Europäisches Patentamt

European Patent Office

Office européen des brevets

(11) Publication number: **0 133 768**
A1

## (12) EUROPEAN PATENT APPLICATION

(21) Application number: **84304998.2**

(22) Date of filing: **24.07.84**

(51) Int. Cl.⁴: **F 16 G 11/12**

(30) Priority: **29.07.83 GB 8320485**

(43) Date of publication of application:
**06.03.85 Bulletin 85/10**

(84) Designated Contracting States:
**IT**

(71) Applicant: **Rovert Controls (Cheltenham) Limited
Alstone Lane Industrial Estate Alstone Lane
Cheltenham Gloucestershire GL51 8HF(GB)**

(72) Inventor: **Checkley, Peter Edward
154 The Beeches
Upton-on-Severn Worcestershire WR8 0QQ(GB)**

(74) Representative: **Wynne-Jones, John Vaughan et al,
Wynne-Jones, Lainé & James 22, Rodney Road
Cheltenham Gloucestershire GL50 1JJ(GB)**

(54) A cable tensioning device.

(57) A cable tensioning device 10 comprises a cylinder 11 and a piston 12 slidably mounted in the cylinder with its rod 13 extending through one end. Each of the cylinder 11 and the rod 13 are provided with cable anchors 14 at their outer ends.

The piston and cylinder define two oil compartments 17, 18, the first of which extends into the hollow piston rod 13 so that oil within the compartment can act on a slidable wall 21 to compress gas in a reservoir 22. Flowpaths 24, 25 exist between the two compartments; the upper path 24 contains a pressure relief valve allowing flow from the second compartment 18 to the first compartment 17, whilst the lower fluid path 25 has a non-return valve allowing flow in the reverse direction. The external application of tension to the cable causes extension of the device and compression of the gas in the chamber 22, so that when the tension is released the gas contracts the device restoring tension in the cable. The pressure relief valve prevents an instantaneous reaction from the device with the result that there is a dead band preventing an oscillatory condition being set up.

FIG. I.

## A Cable Tensioning Device

This invention relates to cable tensioning devices and in particular, but not exclusively, to devices for automatically controlling the tension in cables.

In such applications as aerial stays it is often necessary to monitor and adjust the tension in the cables to allow for external forces, such as wind, which vary the tension in the cable over a relatively short period. Most existing systems require an external hydraulic power pack and these are quite impractical for remote sites, where electricity supplies are limited or not available. There have been proposals for self-powered tensioners, but to date these have been bulky and have not been capable of being mounted in the stays themselves. This has meant that they are much more difficult to utilise and renders them more liable to vandalism.

It is the object of the invention to provide an improved cable tensioning device and preferably to provide an automatic tension control device mountable in a stay.

From one aspect the invention consists in a cable tensioning device comprising actuator means for applying a tension to a cable and energy storage means for storing energy when the tension in the cable rises and for actuating the actuator means to tension the cable when the tension in the cable drops.

0133768

In a preferred embodiment the actuator means is arranged to slacken the cable only when the tension in the cable rises above a predetermined level. The actuator means may be extensible, for example, a piston/cylinder assembly, and the energy storage means may normally hold it in its contracted state.

Where a piston/cylinder assembly is used, it may include a liquid reservoir and the energy storage device may include a gas reservoir separated from the liquid reservoir by the movable wall, or the like, whereby movement of the piston in a sense to compress the liquid in the liquid reservoir causes movement of the wall in a sense to compress the gas in the gas reservoir. The liquid reservoir may include first and second compartments and a flow-path interconnecting them. Thus extension of the actuator means may cause a reduction in volume of the second compartment and hence a flow of liquid into the two compartments. The flow-path may include a valve or restriction, for example a pressure relief valve, which may be arranged such that liquid can only flow from the second compartment to the first compartment when the pressure differences between the compartments exceeds a predetermined level.

Preferably a separate flow-path is provided from the first to the second compartment and it may include a non-return valve or pressure relief valve.

BKCD/JL                          -2-

These arrangements of flow-paths provide damping on extension and/or contraction of the actuator means, but any suitable arrangement can be utilised to provide such damping.

From another aspect the invention consists in a tensioning device comprising an extensible actuator including a piston/cylinder assembly having first and second liquid compartments, the second compartment having a wall defined by the piston whereby extension of the actuator causes movement of the piston in a direction to reduce the volume of that compartment, a flow-path between the first and second compartments, and an energy storage device, communicating with the first compartment, for storing and releasing energy to the liquid in the first compartment in response to pressure variations therein, such that energy is stored on extension of the actuator and released to cause contraction of the actuator.

In this latter case the device may further comprise a valve for restriction in the flow-path whereby liquid flows from the second compartment to the first compartment, and hence extensible movement of the actuator can only occur when the pressure differences between the first and second compartments exceeds a predetermined level.

Preferably liquid can only flow from the first compartment to the second compartment when the pressure differences between them drops below a predetermined level.

From a further aspect the invention consists in an automatic cable tensioning device comprising an actuator for varying the tension in a cable in response to external forces on the cable and means for inhibiting the actuator whenever the tension in the cable lies between predetermined levels.

The invention may be performed in various ways and embodiments    will now be described, by way of example, with reference to the accompanying drawings, in which:-

Figure 1 is a diagrammatic part-sectional view of a cable tensioning device;

Figure 2a to 2d are diagrammatic part-sectional views of the device of Figure 1 in various stages of its cycle of operation;

Figure 3 is a scrap section showing a more detailed construction of a device of the type of Figure 1, and

Figure 4 is a longitudinal sectional view of a further embodiment with the cylinder and anchors omitted.

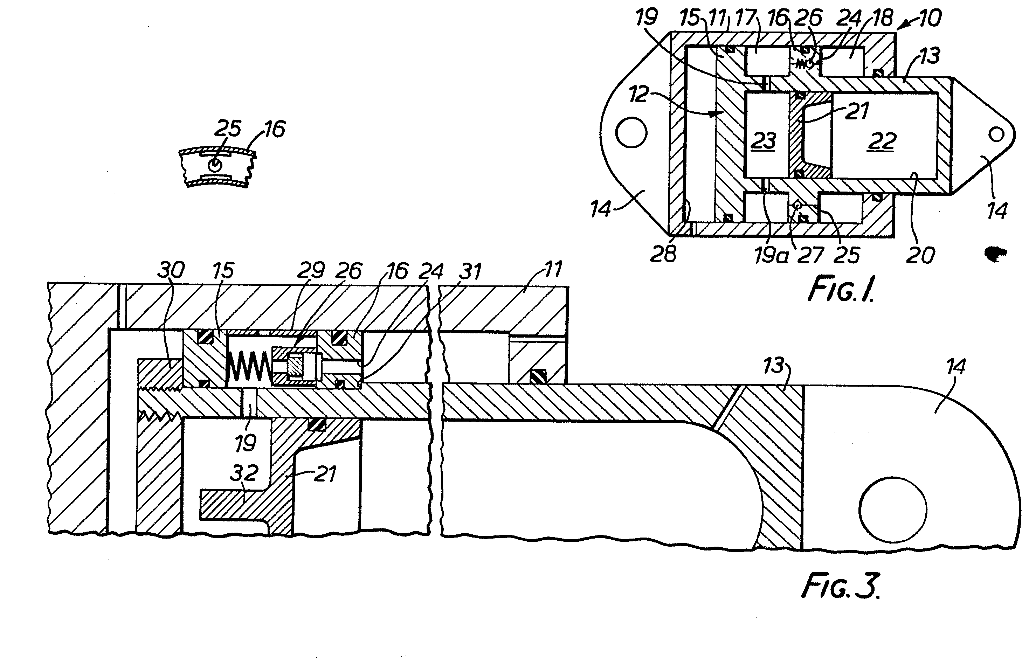

Figure 1 shows a cable tensioning device generally indicated at 10. The device comprises a cylinder 11 and a piston 12 slidably mounted in the cylinder with its rod 13 extending through one end thereof.   Each of the cylinder 11 and rod 13 are provided with cable anchors 14 at their outer ends.

The piston 12 is provided with two spaced piston elements 15,16 which define two annular oil compartments 17,18. The first of these compartments 17 lies between

BKCD/MMD

the elements 15,16 and extends into the hollow piston rod 13 via passages 19,19a. The hollow interior 20 of piston rod 13 is divided by a slidable wall 21 into a righthand gas reservoir 22 and a left hand oil chamber 23, which forms an extension of the first compartment.

Two flow-paths 24,25 are provided in the second piston element 16. The upper fluid path 24 contains a pressure relief valve 26 which incorporates a non-return valve to prevent flow along fluid path 24 from the first compartment 17 to the second compartment 18. The lower fluid path 25 includes a non-return valve 27 which acts to limit flow in the first compartment/second compartment direction only.

Prior to insertion in a cable the oil compartments 17,18 and chamber 23 are filled with oil and the gas reservoir 22 is filled with gas; the relative pressures being selected so that the piston is forced towards the closed end 28 of the cylinder 11. This position is shown in Figures 1 and 2a. When the device 10 is located in a cable, the oil pressure acting on the piston will hold that cable in tension, as can be seen in Figure 2b.

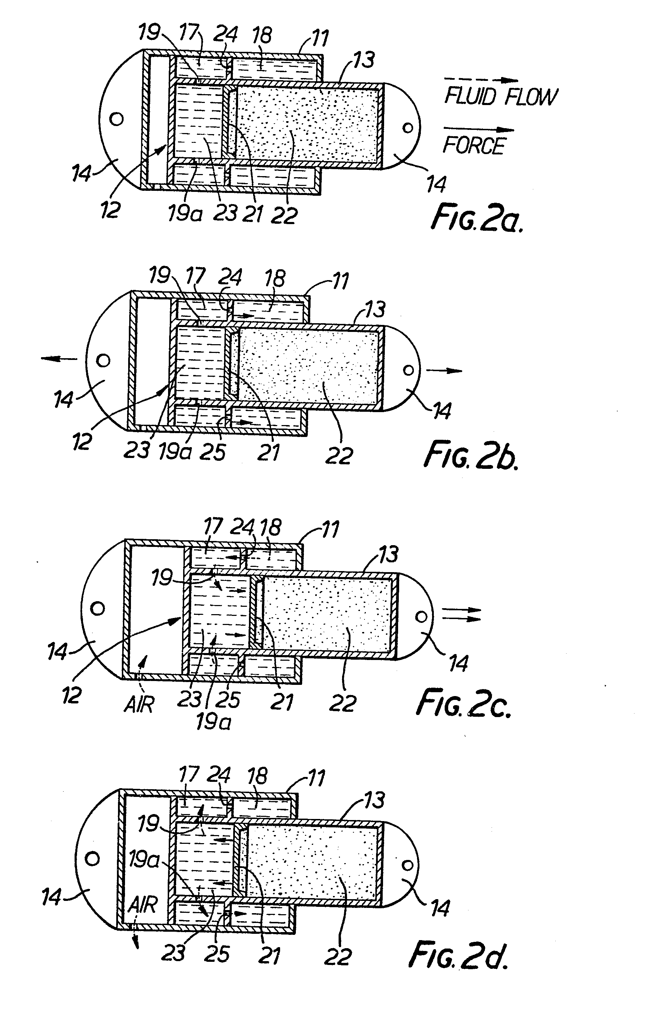

When the device 10 is held in tension the piston element 16 acts on the oil in the second compartment 18 in a sense to compress it, but because the oil is virtually incompressible there is no movement of the piston 12. If the tension on the device 10 increases, for example due to a gust of wind or contraction of the

BKCD/JL                    -5-

cable arising from increased temperature, the pressure of the oil in the second compartment 18 increases until the pressure drop across the pressure relief valve 26 reaches a predetermined level, whereupon the valve 26 opens and oil flows from the second compartment into the first compartment and hence into the oil reservoir 23 forcing back the movable wall 21 by compressing the gas in the gas reservoir 22. As liquid passes out of the second compartment 18 the piston 12 can move to extend the device 10 and hence to reduce the tension in the cable. This operation is illustrated in Figure 2c.

As oil flows from the second compartment 18 to the first compartment 17 the pressure drop between the compartments reduces and fairly rapidly the pressure relief valve 26 will close locking piston 12 in its new position.

If the tension in the cable then drops the pressure in the second compartment will drop and fairly quickly it will be found that the pressure in the first compartment is higher than that of the second compartment, because of the force applied to the movable wall 21 by the gas in the reservoir 22. This excess gas pressure will then force oil out of the first compartment 17 into the second compartment 18 through the non-return valve 27 until the device returns to a stable contracted position.

It will be appreciated that the tension at which the device will begin to extend can be pre-set by proper selection of the original oil and gas pressures and the type of pressure relief valve chosen. The first two of these parameters also determines the drop in tension required for the device to return to its contracted position. Thus by suitable preparation at manufacture, a cable tension device can be provided which will maintain the cable within a pre-determined tension range by automatically compensating for variations in the cable tension due to external environmental conditions.

It will be appreciated that various modifications may be made to the general construction described above. For example, the return fluid path 25 may include a pressure relief valve or non-return valves may be used in both flow-paths, if an operational deadband is not required. Similarly the second piston element 16 could be dispensed with and the valves 26,27 could be placed in passages 19,19a respectively or they might be placed in passages in a wall formed across chamber 23. Although a gas energy storage device is particularly convenient,other suitable arrangements may be used and they need not necessarily be mounted in the piston rod 12.

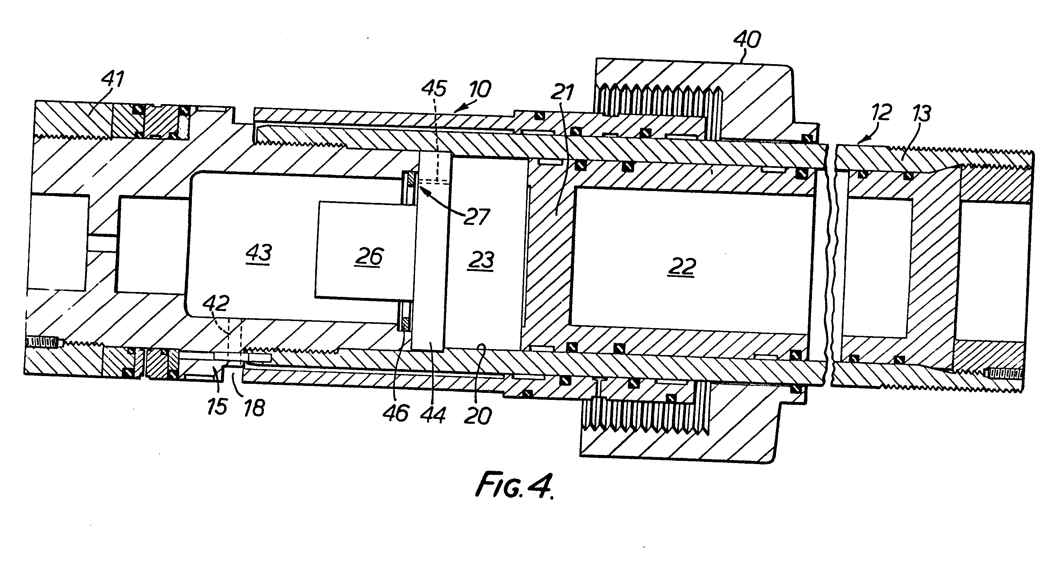

Figure 3 shows a more detailed constructional view of the apparatus and it will be seen that the piston may be formed of a number of elements. In particular the two piston elements 15 and 16 may be annuli held apart by a spacer 29 and locked between a nut 30 and a seat 31 on the piston rod 13. The movable wall 21 may be provided with legs 32 to prevent it closing off passages 19,19a

BKCD/JL                          -7-

-8-

and locking up the device. Charge valves 32 may be provided in the cylinder 11 and piston rod 13 for the introduction of oil and gas.

In each of the Figures a single fluid path 24 and a single return path 25 is shown. In practice it will often be desirable to have a plurality of one or both of paths 24, 25 so as to increase the flow rate between the chambers and hence to improve the response of the device. For example, with one form of the device the provision of forty fluid paths 24, each suitably valved, gives an extension of 1 metre/sec.

Figure 4 shows an alternative embodiment wherein the sleeve valve 26 and the non-return valve 27 have been placed in a wall formed across chamber 23, as suggested above. The cylinder 11 has been omitted from this figure, but it is engaged around the left-hand end of the piston 12 by means of an annular screw cap 40. The piston head 41 moves within the cylinder and compresses oil within the space 18 when the cable is tensioned. The compressed oil flows through transverse passages 42 into a chamber 43 which is divided from the chamber 23 by means of a wall 44. A pressure relief valve 26 is connected in an aperture formed in the wall 44 and allows oil to flow from the chamber 43 to the chamber 23 once movement of the piston head 41 has

BKCD/MMD

increased the pressure in the chamber 43 to a pre-determined differential above the pressure in the chamber 23.

The influx of pressurised oil into the chamber 23 moves the sliding wall 21 to the right compressing the gas in the chamber 22, as previously described. The non-return valve 27 is constituted by a set of return passages 45 arranged in an annular configuration in the wall 44 and a sealing washer 46 which is held to close the passages 45 by the pressure in the chamber 43.

On the release of tension in the cable the pressure in the chamber 23 is built-up by the compressed gas in chamber 22 and eventually is sufficiently above that in the chamber 43 for it to push the washer 46 to the right allowing oil to flow from the chamber 23 to the chamber 43 and hence allowing contraction of the tensioner 10.

The differential pressure necessary to cause movement of the washer 46 depends to a great extent on the relative areas of the faces of the washer which are acted on by the pressure in the chamber 43 and in the chamber 23, respectively.

-10-

CLAIMS

1. A cable tensioning device comprising actuator means for adjusting the tension in a cable and energy storage means for storing energy when the tension in the cable rises and for actuating the actuator means to tension the cable when the tension in the cable drops.

2. A device as claimed in claim 1 wherein the actuator means is arranged to slacken the cable only when the tension in the cable rises above a predetermined level.

3. A device as claimed in claim 1 or claim 2 wherein the actuator means is extensible and wherein the energy storage means normally holds it in its contracted state.

4. A device as claimed in claim 3 including a liquid reservoir and wherein the energy storage device includes a gas reservoir separated from the liquid reservoir by a movable wall, or the like, whereby movement of the actuator in a sense to compress the liquid in the liquid reservoir causes movement of the wall in the sense to compress the gas in the gas reservoir.

5. A device as claimed in claim 4 wherein the liquid reservoir includes first and second compartments and a flow-path interconnecting them.

6. A device as claimed in claim 5 wherein extension of the actuator means causes a reduction in volume of the second compartment and hence a flow of liquid into the first compartment.

7. A device as claimed in claim 5 or claim 6 whereby the flow-path includes a valve, preferably a pressure relief valve, or restriction.

8. A device as claimed in claim 7 wherein liquid can only flow from the second compartment to the first compartment when the pressure difference between the compartments exceeds a predetermined level.

9. A device as claimed in any one of claims 4 to 8 comprising a separate flow-path from the first to second compartment including a non-return valve or pressure relief valve.

10. A tensioning device comprising an extensible actuator including a piston/cyclinder assembly having first and second liquid compartments, the second compartment having a wall defined by the piston whereby extension of the actuator causes movement of the piston in a direction to reduce the volume of that compartment, a flow-path between the first and second compartments, and an energy storage device, communicating with the first compartment, for storing and releasing energy to the liquid in the first compartment in response to pressure variations therein, such that energy is stored on extension of the actuator and released to cause contraction of the actuator.

11..A device as claimed in claim 10 further comprising a valve or restriction in the flow-path whereby liquid flows from the second compartment to the first compartment, and hence extensible movement of the actuator can only occur when the pressure differences between the first and second compartments exceeds a predetermined level.

12. A device as claimed in claim 10 or claim 11 wherein liquid can only flow from the first compartment to the second compartment when the pressure difference between them drops below a predetermined level.

13. An automatic cable tensioning device comprising an actuator for varying the tension in a cable in response to external forces on the cable and means for inhibiting the actuator whenever the tension in the cable lies between predetermined levels.

BKCD/JL

FIG.1.

FIG.3.

FLUID FLOW

FORCE

FIG. 2a.

FIG. 2b.

FIG. 2c.

FIG. 2d.

FIG. 4.

## DOCUMENTS CONSIDERED TO BE RELEVANT

| Category | Citation of document with indication where appropriate, of relevant passages | Relevant to claim | CLASSIFICATION OF THE APPLICATION (Int Cl 4) |
|---|---|---|---|
| X | FR-A-2 185 093 (MESSIER-HISPANO) * Page 2, line 19 - page 4, line 11; figure 1 * | 1,3-7, 10,11 | F 16 G 11/12 |
| X | US-A-2 417 581 (ALDRED) * Whole document * | 1,4-7, 10,11 | |
| X | FR-A- 915 184 (BOFIELD) * Page 6, lines 77-104; figure 1 * | 1,3,5-7,10, 11 | |
| A | US-A-3 658 297 (BANKS) * Column 2, line 63 - column 3, line 6; figure 1 * | 4 | |
| A | US-A-4 011 694 (LANGFORD) | | |

TECHNICAL FIELDS SEARCHED (Int. Cl.4)

F 16 G
H 01 Q
E 04 H

The present search report has been drawn up for all claims

| Place of search | Date of completion of the search | Examiner |
|---|---|---|
| THE HAGUE | 19-10-1984 | BARON C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82